(19) Europäisches Patentamt / European Patent Office / Office européen des brevets

(11) **EP 3 001 155 B1**

(12) **FASCICULE DE BREVET EUROPEEN**

(45) Date de publication et mention de la délivrance du brevet:
**12.02.2020 Bulletin 2020/07**

(21) Numéro de dépôt: **15184851.2**

(22) Date de dépôt: **11.09.2015**

(51) Int Cl.:
*G01F 23/24* (2006.01)  *G01K 7/00* (2006.01)
*G01K 17/06* (2006.01)  *G01F 23/00* (2006.01)
*G01F 19/00* (2006.01)  *G01F 22/00* (2006.01)
*G01F 23/02* (2006.01)  *G01F 25/00* (2006.01)
*B67D 7/08* (2010.01)  *G01N 25/00* (2006.01)
*G01K 1/00* (2006.01)

(54) **JAUGE, DISPOSITIF DE JAUGEAGE ET PROCÉDÉ DE JAUGEAGE D'UN DISTRIBUTEUR DE CARBURANT**

MESSANZEIGE, MESSVORRICHTUNG UND MESSVERFAHREN EINER KRAFTSTOFF-ZAPFSÄULE

GAUGE, GAUGING DEVICE AND METHOD FOR GAUGING A FUEL DISPENSER

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **18.09.2014 FR 1458822**

(43) Date de publication de la demande:
**30.03.2016 Bulletin 2016/13**

(73) Titulaire: **Tokheim Holding B.V.**
**5531 AD Bladel (NL)**

(72) Inventeur: **Cloutier, Philippe**
**14320 May/Orne (FR)**

(74) Mandataire: **Cabinet HERRBURGER**
**115, Boulevard Haussmann**
**75008 Paris (FR)**

(56) Documents cités:
WO-A1-02/086777    WO-A1-2013/150202

- "IPS-C-IN-240", , mai 1997 (1997-05), XP055188344, Extrait de l'Internet: URL:http://det-mop.ir/ips/history/in/c-in- 240.pdf [extrait le 2015-05-08]
- L. F. EASON: "Gravimetric Calibration of Volumetric Standards with Capacities Exceeding Five Gallons", NCSL INTERNATIONAL MEASURE: THE JOURNAL OF MEASUREMENT SCIENCE, vol. 1, no. 4, décembre 2006 (2006-12), pages 60-72, XP055188421,
- Carol Hockert ET AL: "Specifications and Tolerances for Reference Standards and Field Standards Weights and Measures Specifications and Tolerances for Graduated Neck Type Volumetric Field Standards", , 1 February 2010 (2010-02-01), XP055188415, Retrieved from the Internet: URL:http://www.nist.gov/pml/wmd/upload/hb- 105-3-2010.pdf [retrieved on 2015-05-08]
- Apljak Ventures / Original Design By Andreas Viklund - Http://andreasviklund.Com/: "Volumetric Calibrations", , 1 January 2010 (2010-01-01), pages 5-5, XP055160295, Retrieved from the Internet: URL:http://metrology.burtini.ca/vol_calibr ate.html#openneck [retrieved on 2015-01-07]

**Description**

La présente invention concerne une jauge, un dispositif de jaugeage et un procédé de jaugeage d'un distributeur de carburant.

Un distributeur de carburant est classiquement connecté à un circuit de distribution de carburant relié à une cuve de stockage. Il comprend au moins un mesureur destiné à mesurer le volume de carburant distribué. Ce mesureur est dans la majorité des cas un mesureur volumétrique tel un mesureur à pistons à course réglable. Le volume de carburant mesuré par le mesureur est ensuite transmis à un calculateur puis affiché. Le distributeur comprend également un tuyau flexible d'alimentation en carburant relié d'une part au mesureur et d'autre part à un pistolet destiné à être inséré dans le col d'un réservoir d'un véhicule.

Un distributeur de carburant est régulièrement soumis à des opérations de jaugeage pour satisfaire aux exigences de la métrologie légale.

Pour la mise en œuvre de ces opérations de jaugeage, on utilise des jauges ou récipients de mesures qui sont en règle générale métalliques et qui comprennent un corps de jauge de volume prédéfini équipé d'une ouverture de sortie pouvant être fermée par une vanne de vidage, ainsi qu'un col de jauge équipé d'une graduation et dans lequel l'embout du pistolet distributeur peut être inséré pour permettre de remplir la jauge de carburant.

Lors d'une opération de jaugeage, avec une jauge de 20 litres par exemple, on insère l'embout du pistolet distributeur dans le col de jauge et on verse du carburant dans la jauge jusqu'à ce que l'afficheur du distributeur affiche 20 litres.

On lit ensuite le pourcentage d'erreur indiqué sur la graduation du col de jauge. Pour les distributeurs de carburant, la tolérance légale est de +/- 0,5%.

Si la tolérance n'est pas respectée, on actionne des moyens d'ajustement du mesureur volumétrique (vis de réglage), ce qui a pour effet de faire varier la course des pistons.

Selon les règles de la métrologie légale (ref. OIML R117-1), la jauge et le processus mis en œuvre pour contrôler les distributeurs de carburants doivent avoir une incertitude inférieure à 0,17%.

Or, les contributions à l'incertitude sont nombreuses (opérateur, évaporation de l'essence, brumisation du carburant lors du remplissage, variation de température).

La contribution à l'incertitude due à l'évaporation et à la brumisation du carburant a été réduite par les solutions décrites dans les brevets FR 2 955 658 et FR 2 971 499 déposés par la société TOKHEIM.

Cependant, il subsiste encore une autre source d'incertitude due à la différence de température entre le carburant délivré par le distributeur et le carburant contenu dans la jauge.

En effet, lors de l'opération de jaugeage, le carburant qui traverse le distributeur de carburant est mesuré à une température Tm par le mesureur volumétrique du distributeur. Cependant, lors de la lecture de l'erreur sur la graduation de la jauge, le carburant peut être à une température différente.

L'écart entre la température du carburant traversant le mesureur volumique du distributeur de carburant qui provient d'une cuve de stockage souterraine et la température du carburant dans la jauge peut être de l'ordre de 2°C par exemple, notamment en été.

Cet écart de température peut induire des erreurs étant donné que l'expansion thermique est d'environ 0,095% / °C pour le diesel et d'environ 0,12% / °C pour l'essence. Plus l'écart de température est grand et plus l'erreur est grande. Un écart de température de 2°C entraine une erreur de 0.24% pour l'essence, ce qui est hors tolérance.

De plus, certains distributeurs de carburants peuvent être équipés d'un système dit de "compensation en température" ou ATC (« Automatic Temperature Compensation »), qui recalcule le volume mesuré par le mesureur du distributeur à la température de référence de 15°C. Cela peut induire une anomalie de lecture de la jauge qui peut être mal interprétée.

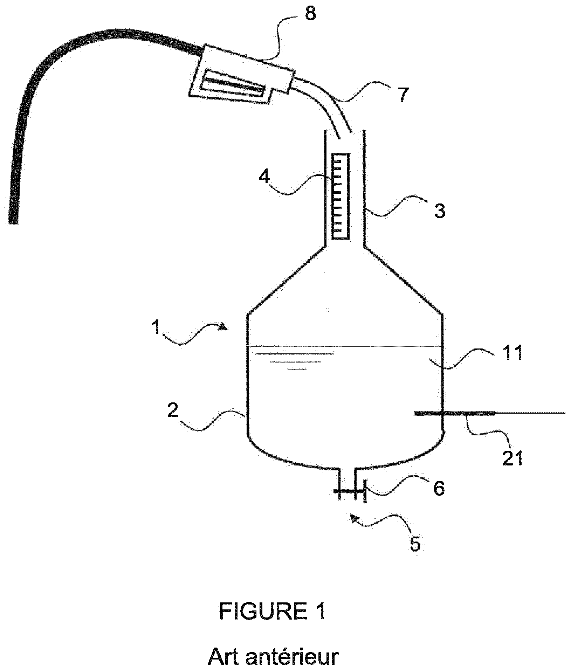

On connaît des jauges comprenant un capteur de température disposé sur le corps de la jauge et plus précisément sur le ventre de la jauge pour mesurer la température du carburant dans la jauge après l'étape de remplissage de la jauge, comme représenté sur la figure 1. Cette mesure de température est utilisée lorsque le distributeur comprend un dispositif de compensation en température recalculant le volume de carburant à une température de 15°C. Ces jauges connues et cette mesure de température sont divulguées par exemple dans le document "Spécifications and Tolerances for Reference Standards and Field Standards Weights and Measures Spécifications and Tolerances for Graduated Neck Type Volumetric Field Standards", NIST Handbook 105-3, February 2010.

Des méthodes de calcul connues permettent de ramener le volume lu sur la jauge à une température de 15°C, correspondant à la température de référence utilisée pour la compensation en température du mesureur.

Cela permet de réduire l'incertitude liée à l'écart entre la température du carburant dans la jauge et la température du carburant mesuré par le mesureur du distributeur de carburant pour des distributeurs comprenant un dispositif de compensation en température.

Cependant, cette méthode n'est pas applicable à des distributeurs de carburant ne comprenant pas de dispositif de compensation en température. Elle ne permet pas de réduire cette incertitude pour ces distributeurs qui équipent cependant la majorité des stations-services. Il a donc un besoin pour ce type de distributeur.

La présente invention a pour objet de remédier à cet inconvénient en proposant un dispositif de jaugeage et un procédé pour le jaugeage d'un distributeur de carburant permettant de réduire l'incertitude due à l'écart entre la température du carburant dans la jauge et la température du carburant mesuré par le mesureur d'un distributeur de carburant ne comprenant pas de système de compensation en température et donc pas de sonde de température intégrée.

L'invention concerne un dispositif de jaugeage pour le jaugeage d'un distributeur de carburant comprenant un corps de jauge de volume prédéfini, un col de jauge équipé d'une graduation et un premier logement destiné à recevoir une première sonde de température pour mesurer la température T1 du carburant après le remplissage de la jauge en carburant. Ledit premier logement est situé sur le corps de jauge de façon à permettre de mesurer la température du carburant par une première sonde de température insérée dans ledit premier logement lorsque la jauge est remplie.

Selon l'invention, le dispositif de jaugeage comprend un deuxième logement destiné à recevoir une deuxième sonde de température pour mesurer la température T2 du carburant lors de son introduction dans la jauge durant une opération de jaugeage. Le deuxième logement est situé sur le col de jauge de façon à ce que lorsqu'une deuxième sonde de température est insérée dans ledit deuxième logement, cette dernière soit en contact avec le carburant déversé dans la jauge lors de son remplissage. Le contact peut être direct ou indirect.

Le deuxième logement est de préférence situé au-dessus de la graduation du col de jauge et à proximité de l'entrée de la jauge afin de mesurer la température la plus proche possible de celle du carburant traversant le mesureur et évitant que la sonde soit en contact permanent avec le carburant vers la fin du remplissage.

Le dispositif de jaugeage comprend une première sonde de température positionnée dans le premier logement pour mesurer la température T1 du carburant dans la jauge après l'opération de remplissage.

Selon l'invention, le dispositif de jaugeage comprend :

- une deuxième sonde de température positionnée dans le deuxième logement pour mesurer la température T2 du carburant lors de son introduction dans la jauge, et
- un dispositif électronique relié aux premières et deuxièmes sondes de température pour effectuer l'acquisition des températures T1 et T2 et calculer, à partir des températures mesurées T1 et T2, une valeur de correction $E_c$ à appliquer au volume lu sur la graduation de la jauge, tenant compte de l'écart de températures entre la température du carburant traversant le mesureur du distributeur et la température du carburant contenu dans la jauge.

Selon un mode de réalisation particulier, la première sonde de température et/ou la deuxième sonde de température comprend un moyen d'isolation thermique disposé entre ladite sonde et la paroi de la jauge.

L'invention concerne également un procédé de jaugeage mettant en œuvre le dispositif de jaugeage tel que défini précédemment.

Selon l'invention, le procédé de jaugeage comprend les étapes successives suivantes:

- mesure de la température T2 du carburant lors de son introduction dans la jauge durant l'étape de remplissage de la jauge au moyen de la deuxième sonde de température,
- mesure de la température T1 du carburant contenu dans la jauge après l'étape de remplissage de la jauge au moyen de la première sonde de température,
- calcul, à partir des températures mesurées T1 et T2, d'une valeur de correction $E_c$ à appliquer au volume lu sur la graduation de la jauge, tenant compte de l'écart de température entre la température du carburant traversant le mesureur du distributeur de carburant et la température du carburant contenu dans la jauge.

Lesdits logements forment des points de mesure ou de prise de la température du carburant.

L'invention permet ainsi de fournir un dispositif de jaugeage et un procédé permettant de réduire l'incertitude due à l'écart entre la température du carburant dans la jauge et la température du carburant mesuré par le mesureur d'un distributeur de carburant ne comprenant pas de système de compensation en température. Un écart de température de 2°C entraine une erreur de mesure sur le volume de 0,24% pour l'essence, ce qui est trop élevé étant donné que le procédé et l'outil de mesure ne doivent pas présenter une incertitude supérieure à 0.17%.

L'invention permet d'obtenir ce résultat de façon automatique, simplement et rapidement. Il n'est pas nécessaire d'introduire une sonde de température dans le distributeur pour obtenir la température du carburant délivré. Cette opération serait longue et fastidieuse car les distributeurs et mesureurs ne comprennent pas de points de mesure de la température du carburant.

Selon un autre mode de réalisation particulier de l'invention, une pluralité de valeurs de température $T2_n$ est mesurée pendant un temps t durant l'opération de remplissage de la jauge.

Une température moyenne $T2_{moy}$ est calculée à partir de ces valeurs de température mesurée $T2_n$. $T2_{moy}$ est utilisée pour calculer le pourcentage d'erreur $E_c$.

Ceci permet de prendre en compte les variations de température pendant la mesure, améliorant la précision.

Selon un autre mode de réalisation particulier de l'invention, les x premières et les x dernières valeurs de températures $T2_n$ sont supprimées pour calculer $T2_{moy}$.

Ceci permet de réduire le bruit lors du démarrage et de l'arrêt du remplissage de la jauge correspondant à un régime de remplissage transitoire durant lequel le débit de carburant varie et est plus faible. En effet, au début du remplissage par exemple, le débit de 50 1/min est obtenu de façon non instantanée. La précision est donc améliorée.

Il est à noter que l'invention est également applicable à un distributeur de carburant équipé d'un système de compensation en température auquel cas seule la température T1 du carburant dans la jauge après remplissage est mesurée, tandis que la température T2 est considérée comme étant égale à 15°C.

Les caractéristiques de l'invention seront décrites plus en détail en se référant aux dessins annexés dans lesquels :

- la figure 1 représente schématiquement une jauge de l'art antérieur ;
- la figure 2 représente schématiquement une jauge comprenant deux logements pour recevoir des sondes de température selon un mode de réalisation possible de l'invention ;
- la figure 3 représente schématiquement un dispositif de jaugeage selon l'invention ;

La figure 1 représente schématiquement une jauge 1 de l'art antérieur qui est en règle générale métallique et qui comprend un corps de jauge 2 de volume prédéfini équipé d'une ouverture de sortie 5 pouvant être fermée par une vanne de vidage 6, ainsi qu'un col de jauge 3 équipé d'une graduation 4 et dans lequel l'embout 7 du pistolet distributeur 8 peut être inséré pour permettre de remplir la jauge 1 en carburant. Cette jauge 1 est parfois équipée d'un capteur de température 21 permettant de mesurer la température du carburant contenu dans la jauge 1.

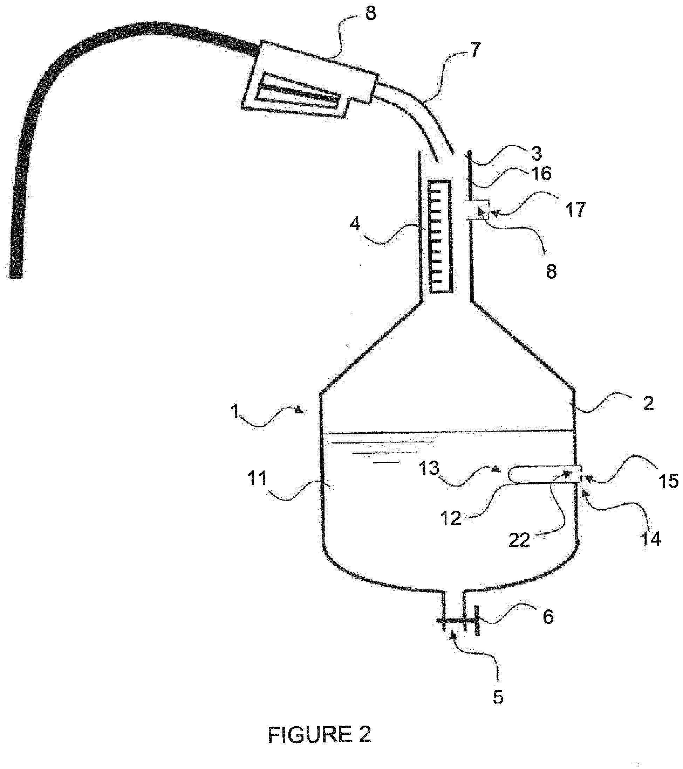

La figure 2 représente schématiquement une jauge 1 selon un mode de réalisation possible de l'invention.

La jauge 1 comprend un premier logement 22 destiné à recevoir une première sonde de température 9 pour mesurer la température T1 du carburant 11 après le remplissage de la jauge 1 en carburant. Ledit premier logement 22 est situé sur le corps de jauge 2. De préférence, le premier logement 22 est placé à l'endroit du ventre de la jauge, à la partie inférieure de la jauge de façon à ce que la première sonde de température 9 soit en contact avec le carburant 11 après remplissage de la jauge 1.

Selon un mode de réalisation possible, et comme représenté sur la figure 2, le premier logement 22 se présente sous la forme d'un doigt de gant formant une protubérance 12 dirigée vers l'intérieur de la jauge 1. La protubérance 12 présente une première extrémité 13 fermée et une deuxième extrémité 14 ayant une ouverture 15 pour l'insertion de la première sonde de température 9. La protubérance 12 est hermétique, de façon à ce que la première sonde de température 9 ne soit pas en contact direct avec le carburant 11.

La protubérance 12 est horizontale sur la figure 2. Alternativement, elle est avantageusement inclinée vers le bas. Un liquide ou un gel ayant une conduction thermique élevée est introduite dans le premier logement 22 pour optimiser le contact thermique entre la première sonde de température 9 et le carburant 11.

D'autres modes de réalisation sont également possibles comme un simple orifice traversant la paroi de la jauge de façon à ce que la première sonde de température 9 soit en contact directement avec le carburant 11. La sonde est fixée de façon hermétique à la jauge.

La jauge 1 comprend également un deuxième logement 8 destiné à recevoir une deuxième sonde de température 10 pour mesurer la température T2 du carburant 11 lors de son introduction dans la jauge 1 durant une opération de jaugeage. Le deuxième logement 8 est situé sur ou à proximité du col de jauge 3. Les premier 22 et deuxième 8 logements permettent d'obtenir deux points de mesure de la température distincts et distants.

Sur la figure 2, le deuxième logement 8 est formé par un orifice 17 traversant une protubérance 16 dirigée vers l'extérieur de la jauge 1. La deuxième sonde de température 10 est fixée de manière hermétique à la protubérance 16 formant un support de sonde.

D'autres configurations sont également possibles comme celle décrite précédemment pour le premier logement 22, le deuxième logement 8 formant alors un doigt de gant hermétique.

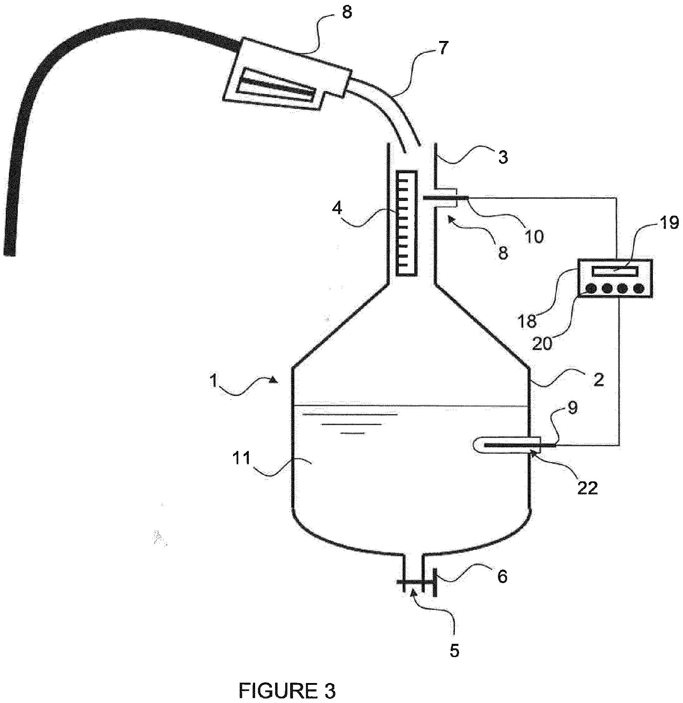

La figure 3 représente les sondes de températures 9, 10 insérées dans leurs logements 22, 8 respectifs.

Plusieurs types de sondes de températures 9, 10 sont possibles comme des sondes platine PT100 ou la sonde de température Dallas DS18B20, par exemple. La sonde de température Dallas DS18B20 présente l'avantage d'être déjà encapsulée dans une enveloppe étanche. Elle fournit un signal de sortie numérique évitant l'utilisation d'un convertisseur analogique/numérique.

La sonde de température DS18B20 présente une résolution configurable.

Dans l'exemple du procédé de jaugeage qui sera décrit ci-dessous, il a été choisi d'utiliser une résolution de 10bits permettant d'obtenir une précision de 0.25°C et un temps de conversion de 187.5 ms. D'autres résolutions sont utilisables.

La figure 3 représente schématiquement un dispositif de jaugeage comprenant les première 9 et deuxième 10 sondes de température et un dispositif électronique 18.

Le dispositif électronique 18 est relié aux premières 9 et deuxièmes 10 sondes de température pour effectuer l'acquisition des températures T1 et T2. Il permet de calculer, à partir des températures mesurées T1 et T2, une valeur de correction $E_c$ à appliquer au volume lu sur la graduation 4 de la jauge, tenant compte de l'écart de températures entre la température du carburant traversant le mesureur du distributeur et la température du carburant 11 contenu dans la jauge 1.

Le dispositif électronique 18 comporte une mémoire pour stocker, entre autre, les températures mesurées T1 et T2, des moyens de calcul permettant de calculer, à partir des températures mesurées T1 et T2, une valeur de correction Ec à appliquer au volume lu sur la graduation de la jauge, tenant compte de l'écart de températures entre la température du carburant traversant le mesureur du distributeur et la température du carburant contenu dans la jauge et un afficheur 19 permettant d'afficher la valeur de correction $E_c$.

Le dispositif électronique 18 comporte des boutons 20 pour commander l'acquisition des températures T1 et T2 et sélectionner des modes.

Le dispositif électronique 18 peut comprendre une carte Arduino Uno, par exemple, pour sa simplicité d'utilisation et son faible coût. La carte Arduino Uno comprend des moyens de calcul et une mémoire.

Le dispositif électronique 18 est conçu de façon à répondre aux exigences des directives ATEX concernant les environnements explosibles, étant donné qu'il est positionné à proximité de l'entrée du col du jauge 3. Le remplissage de la jauge peut générer une zone ATEX. Le dispositif électronique 18 est donc susceptible d'être en contact avec des vapeurs de carburant. Les boutons 20 sont des boutons ATEX, par exemple.

Alternativement, le dispositif électronique 18 peut être hors zone ATEX, permettant d'utiliser des composants non ATEX et donc moins onéreux.

La deuxième sonde de température 10 est placée dans le deuxième logement 8 de façon à ce qu'au moins son extrémité soit à l'intérieur du col de jauge 3 et en contact avec le carburant versé dans la jauge 1 lors de son remplissage. Avantageusement, tout le corps de la deuxième sonde de température 10 est en contact avec le carburant.

Selon un autre mode de réalisation particulier, la première sonde de température 9 et/ou la deuxième sonde de température 10 comprend un moyen d'isolation thermique (non représenté) disposé entre ladite sonde et la paroi de la jauge permettant d'isoler thermiquement la sonde de la paroi de la jauge et de l'extérieur.

L'invention concerne également un procédé de jaugeage mettant en œuvre le dispositif de jaugeage tel que défini précédemment.

Le principe général du procédé de jaugeage consiste à lire la température T2 du liquide au moment de son entrée dans la jauge 1 (point où la température du liquide est la plus proche de la température traversant le mesureur du distributeur) et la température du liquide T1 dans la jauge 1 après son remplissage. L'acquisition de ces deux températures T1 et T2 permet de calculer une correction $E_c$ à appliquer au volume de carburant lu sur la graduation de la jauge afin de réduire l'incertitude lors de l'opération de jaugeage.

Durant l'étape de mesure de la température T2, une pluralité de valeurs de température $T2_n$ est mesurée pendant un temps t durant l'opération de remplissage de la jauge.

Une température moyenne $T2_{moy}$ est calculée à partir de ces valeurs de température mesurée $T2_n$. La température moyenne $T2_{moy}$ est utilisée pour calculer le pourcentage d'erreur $E_c$ qui sera décrit ci-dessous.

L'utilisation d'une température moyenne permet de tenir compte des fluctuations de température pendant le remplissage de la jauge en carburant.

Pour remplir une jauge de 20 litres avec un débit de 50 1/min environ, il faut compter environ 24 secondes. La résolution de la sonde de température étant de 10 bits avec un temps de conversion de 187.5 ms, il est possible d'acquérir 5 valeurs de température par seconde, soit environ 126 valeurs de température en 24 secondes.

Pour le calcul de la température moyenne T2moy, les x premières et les x dernières valeurs de températures sont supprimées afin de réduire le bruit lors du démarrage et de l'arrêt du remplissage de la jauge correspondant à un régime de remplissage transitoire durant lequel le débit de carburant varie et est plus faible. En effet, au début du remplissage par exemple, le débit commence à 0 1/min pour arriver à 50 1/min en un temps t différent de zéro.

Dans cet exemple, le choix s'est porté sur la suppression des 3 premières et des 3 dernières secondes de remplissage.

Pour des raisons de simplification de calcul, il a été choisi, après l'ordre de démarrage de l'acquisition de la température T2, de programmer la carte Arduino de façon à attendre 3 secondes avant de démarrer l'acquisition des températures T2. Par contre, les 3 dernières secondes d'acquisition des valeurs de température T2 seront mesurées mais supprimées avant le calcul de la température moyenne $T2_{moy}$.

En variante, il est également possible de supprimer les 3 premières secondes d'acquisition des valeurs de température T2 qui ont été mesurées avant le calcul de la température moyenne $T2_{moy}$.

Pour calculer le pourcentage d'erreur ou le facteur de correction à appliquer $E_c$, deux méthodes de calcul sont possibles et proposées dans le dispositif électronique 18.

Une première méthode consiste à utiliser des tables de compensation en température. Il est possible, par exemple, d'utiliser les tables ASTM normalisée donnant un coefficient de correction c à appliquer au volume lu sur la graduation de la jauge qui est fonction de la température mesurée. Ces tables ASTM sont recommandées selon la règle OIML R 63 par l'OIML (Organisation Internationale de la Métrologie Légale). A chaque température correspond un coefficient c. Ce coefficient permet de ramener le volume de carburant lu à la température de 15°C. Le volume corrigé Vc à 15°C est obtenu en multipliant le coefficient de correction c par le volume Vm mesuré sur la graduation de la jauge : Vc = Vm x c.

Selon le procédé de jaugeage, le volume Vc n'est pas calculé. C'est le facteur de correction $E_c$ qui est calculé.

Les deux températures T1 et T2 mesurées correspondent à deux coefficients de correction respectifs c1 et c2. L'erreur ou facteur de correction $E_c$ est donné par :

$$\mathrm{Ec} = \frac{c2}{c1} - 1 \qquad\qquad Equation\ (1)$$

A chaque carburant correspond une table ASTM. Dans la méthode de jaugeage de cet exemple, il est prévu de pouvoir jauger de l'essence et du gasoil. Deux tables ASTM différentes sont donc disponibles dans le dispositif électronique. Lorsque le type de carburant à jauger est sélectionné, la table ASTM correspondant à ce carburant est donc utilisée pour le calcul de l'erreur.

Une deuxième méthode de calcul de l'erreur $E_c$ est la méthode recommandée par l'office fédéral de physique technique allemand, le PTB (Physikalisch-Technische Bundesanstalt) qui est une référence mondiale en termes de métrologie :

$$\mathrm{Ec} = K * \Delta T \qquad\qquad Equation\ (2)$$

Avec : $\Delta T = T2 - T1$

Le coefficient K est un coefficient de dilatation thermique. Il est d'environ 0.12% /°C pour l'essence et de 0.095 /°C pour le gasoil. La température T est en °C.

Ainsi, le choix du carburant va déterminer un coefficient K différent pour le calcul.

Un exemple de procédé de jaugeage est décrit ci-dessous.

Le dispositif électronique 18 du dispositif de jaugeage comprend un menu dans lequel il est possible de choisir la langue, le type de carburant et la méthode de calcul pour calculer l'erreur.

Avant de commencer l'opération de jaugeage, l'opérateur sélectionne la langue au moyen des boutons 20 du dispositif électronique 18.

Il sélectionne ensuite le type de carburant à jauger parmi l'essence et le gasoil.

Il sélectionne ensuite la méthode de calcul à utiliser pour calculer l'erreur $E_c$.

L'opérateur place l'embout 7 du pistolet 8 dans l'entrée du col 3 de la jauge 1. Il appuie sur le bouton « start » pour démarrer l'acquisition des données de températures T2 au moyen de la deuxième sonde 10 placée sur le col 3 de la jauge.

Il verse le carburant dans la jauge qui présente un volume de 20 litres dans cet exemple pour un débit du distributeur de 50 litres/min.

Le début de l'acquisition de la température T2 ne démarre qu'après 3 secondes d'attente pour éliminer les valeurs de température fluctuantes pendant le régime transitoire.

Les données de température sont affichées sur l'afficheur 19 du dispositif électronique 18. L'afficheur 19 est un écran LCD par exemple.

L'opérateur arrête le remplissage de la jauge 1 lorsque l'afficheur du distributeur affiche 20 litres.

Il appuie sur le bouton « start » du dispositif électronique 18 pour démarrer l'acquisition de la température T1 au moyen de la première sonde de température 9 placée dans la partie inférieure de la jauge 1.

Le calculateur calcule la température moyenne $T2_{moy}$ en supprimant les 3 dernières secondes d'acquisition et calcule le pourcentage d'erreur $E_c$ qui est ensuite affiché sur l'afficheur 19.

Par exemple, si la température extérieure est plus élevée que la température du carburant de la cuve de stockage de carburant, la température T1 du carburant dans la jauge sera supérieure à la température T2 du carburant délivré par le distributeur.

Un essai avec de l'essence a été réalisé en utilisant la première méthode de calcul d'erreur au moyen des tables de compensation en température ASTM. Les résultats sont les suivants :

- T1=15.2°C
- T2=14.25°C

- l'erreur $E_c$ est de 0.13 %

Dans ce cas où T1 est supérieur à T2, il faut corriger l'erreur lue sur la graduation 4 de la jauge 1 en tenant compte de cette erreur Ec de 0.13 % due à l'écart de température entre T1 et T2.

Plus la différence de température est grande est plus l'erreur $E_c$ est importante.

Cet exemple montre un mode de réalisation dans lequel deux sondes de température 9, 10 distincts sont utilisées.

En variante selon l'invention, il est possible d'utiliser une seule sonde de température pour effectuer les deux mesures de température T1 et T2.

Dans ce cas, lorsque l'acquisition de la température T2 est terminée après le remplissage de la jauge, la sonde de température est retirée du deuxième logement 8 situé sur le col de jauge 3 pour être placée dans le premier logement 22 situé sur le corps de jauge 2.

L'acquisition de la température T1 est alors effectuée avec cette sonde. Ceci permet d'augmenter la précision de la mesure étant donné que les sondes de températures sont susceptibles de donner deux températures différentes. Il n'est pas nécessaire de tenir compte de cet écart dans le calcul de l'erreur, simplifiant la programmation du calculateur.

Comme il a déjà été indiqué, le procédé de jaugeage conforme à l'invention peut également être utilisé pour effectuer le jaugeage de distributeurs de carburant comprenant un système de compensation en température ATC (« Automatique Temperature Compensation ») permettant d'afficher le volume de carburant correspondant à une température de 15°C et non à la température réelle du carburant traversant le mesureur.

A cet effet, le dispositif électronique 18 du dispositif de jaugeage permet également de sélectionner au moyen des boutons 20 le type de distributeur à calibrer (avec ou sans ATC) c'est-à-dire de sélectionner le mode « sans ATC » auquel cas les températures T1 et T2 sont mesurées comme décrit ci-dessus, mais également un mode « avec ATC » auquel cas seule la température T1 du carburant dans la jauge après remplissage est mesurée, T2 étant considérée égale à 15°C.

## Revendications

**1.** Dispositif de jaugeage d'un distributeur de carburant comprenant une jauge (1) comportant :

* un corps de jauge (2) de volume prédéfini,
* un col de jauge (3) équipé d'une graduation (4),
* un premier logement (22) situé sur le corps de jauge (2),

dispositif **caractérisé par**:
* un deuxième logement (8) situé sur le col de jauge (3) au moins une sonde de température (9, 10) pouvant être positionnée dans le premier logement (22) pour mesurer la température T1 du carburant (11) dans la jauge (1) après le remplissage de cette jauge ou être positionnée dans le deuxième logement (8) pour mesurer la température T2 du carburant (11) lors de son introduction dans la jauge (1) durant une opération de jaugeage, et
un dispositif électronique (18) relié à la (aux) sonde(s) de température (9, 10) pour effectuer l'acquisition des températures T1 et T2 et calculer, à partir des températures mesurées T1 et T2 une valeur de correction $E_c$ à appliquer au volume lu sur la graduation (4) de la jauge, tenant compte de l'écart de température entre la température du carburant traversant le mesureur du distributeur et la température du carburant (11) contenu dans la jauge.

**2.** Dispositif de jaugeage conforme à la revendication 1,
**caractérisé en ce qu'**il comprend
une première sonde de température (9) positionnée dans le premier logement (22) pour mesurer la température T1 du carburant (11) dans la jauge (1) après l'opération de remplissage ainsi qu'une deuxième sonde de température (10) positionnée dans le deuxième logement (8) pour mesurer la température T2 du carburant (11) lors de son introduction dans la jauge (1).

**3.** Dispositif de jaugeage conforme à l'une quelconque des revendications 1 et 2,
**caractérisé en ce que**
le deuxième logement (8) de la jauge (1) est situé au-dessus de la graduation (4) du col de jauge et à proximité de l'entrée de la jauge (1).

**4.** Dispositif de jaugeage conforme à l'une quelconque des revendications 1 à 3,
**caractérisé en ce que**

**EP 3 001 155 B1**

la (les) sonde(s) de température (9, 10) comprend(nent) un moyen d'isolation thermique disposé entre cette (ces) sonde(s) et la paroi de la jauge.

5. Procédé de jaugeage mettant en œuvre le dispositif de jaugeage conforme à l'une quelconque des revendications 1 à 4,
**caractérisé en ce qu'**ill comprend les étapes successives suivantes :

- mesure de la température T2 du carburant lors de son introduction dans la jauge (1) durant l'opération de remplissage de cette jauge (1) au moyen d'une sonde de température,
- mesure de la température T1 du carburant (11) contenu dans la jauge (1) après l'opération de remplissage de cette jauge (1) au moyen d'une sonde de température, et
- calcul à partir des températures mesurées T1 et T2 d'une valeur de correction Ec à appliquer au volume lu sur la graduation de la jauge (4) tenant compte de l'écart de température entre la température du carburant traversant le mesureur du distributeur de carburant et la température du carburant contenu dans la jauge (11).

6. Procédé de jaugeage conforme à la revendication 5,
**caractérisé en ce qu'**
on mesure les températures T2 et T1 du carburant au moyen d'une seule sonde de température, et, lorsque l'acquisition de la température T2 est terminée après le remplissage de la jauge (1), la sonde de température est retirée du deuxième logement (8) situé sur le col de jauge (3) pour être placée dans le premier logement (22) situé sur le corps de jauge (2), et l'acquisition de la température T1 est alors effectuée avec cette sonde.

7. Procédé de jaugeage conforme à la revendication 5,
**caractérisé en ce qu'**
on mesure la température T2 du carburant lors de son introduction dans la jauge (1) durant l'opération de remplissage de la jauge (1) au moyen d'une sonde de température (10), et
on mesure la température T1 du carburant (11) contenu dans la jauge (1) après l'opération de remplissage de cette jauge (1) au moyen d'une autre sonde de température (9).

8. Procédé de jaugeage conforme à l'une quelconque des revendications 5 à 7,
**caractérisé en ce qu'**

- une pluralité de valeurs de températures T2n est mesurée pendant un temps t durant l'opération de remplissage de la jauge, et
- une température moyenne T2moy est calculée à partir de ces valeurs de température mesurées T2n, T2moy étant utilisée pour calculer la valeur de correction Ec.

9. Procédé de jaugeage conforme à la revendication 8,
**caractérisé en ce que**
les x premières et les x dernières valeurs de température $T2_n$ sont supprimées pour calculer $T2_{moy}$.

**Patentansprüche**

1. Messvorrichtung einer Kraftstoff-Zapfsäule, welche eine Messanzeige (1) aufweist, die umfasst:

- einen Messanzeigekörper (2) mit einem vordefinierten Volumen,
- einen Messanzeigehals (3), der mit einer Stricheinteilung (4) ausgestattet ist,
- eine erste Aufnahme (22), die an dem Messanzeigekörper (2) angeordnet ist,

wobei die Vorrichtung **gekennzeichnet ist durch**:

- eine zweite Aufnahme (8), die an dem Messanzeigehals (3) angeordnet ist,
- mindestens einen Temperatursensor (9, 10), der in der ersten Aufnahme (22) angeordnet werden kann, um die Temperatur T1 des Kraftstoffs (11) in der Messanzeige (1) nach dem Befüllen der Messanzeige zu messen, oder in der zweiten Aufnahme (8) angeordnet werden kann, um die Temperatur T2 des Kraftstoffs (11) beim Einleiten in die Messanzeige (1) während eines Messverfahrens zu messen, und
- eine elektronische Vorrichtung (18), welche mit dem mindestens einen Temperatursensor (9, 10) verbunden

8

ist, um die Temperaturen T1 und T2 zu erfassen und, ausgehend von den gemessenen Temperaturen T1, T2, einen Korrekturwert $E_c$ zu messen, der auf das auf der Stricheinteilung (4) der Messanzeige gelesene Volumen anzuwenden ist, wobei der Temperaturunterschied zwischen der Temperatur des Kraftstoffs, der **durch** das Messgerät der Zapfsäule durchläuft, und der Temperatur des in der Messanzeige enthaltenen Kraftstoffs (11) berücksichtigt wird.

2. Messvorrichtung gemäß Anspruch 1,
   **dadurch gekennzeichnet, dass** sie umfasst:
   einen ersten Temperatursensor (9), der in der ersten Aufnahme (22) angeordnet ist, um die Temperatur T1 des Kraftstoffs (11) in der Messanzeige (1) nach dem Füllvorgang zu messen, sowie einen zweiten Temperatursensor (10), der in der zweiten Aufnahme (8) angeordnet ist, um die Temperatur T2 des Kraftstoffs (11) beim Einleiten in die Messanzeige (1) zu messen.

3. Messvorrichtung gemäß einem der Ansprüche 1 oder 2,
   **dadurch gekennzeichnet, dass**
   die zweite Aufnahme (8) der Messanzeige (1) oberhalb der Stricheinteilung (4) des Messanzeigehals und in der Nähe des Einlasses der Messanzeige (1) angeordnet ist.

4. Messvorrichtung gemäß einem der Ansprüche 1 bis 3,
   **dadurch gekennzeichnet, dass**
   der mindestens eine Temperatursensor (9, 10) ein Mittel zur thermischen Isolierung umfasst, das zwischen dem mindestens einen Temperatursensor und der Wandung der Messanzeige angeordnet ist.

5. Messverfahren, welches die Messvorrichtung gemäß einem der Ansprüche 1 bis 4 einsetzt, **dadurch gekennzeichnet, dass** das Verfahren folgende aufeinanderfolgende Schritte aufweist:

   - Messen der Temperatur T2 des Kraftstoffs beim Einleiten in die Messanzeige (1) während des Füllvorgangs der Messanzeige (1) mittels eines Temperatursensors,
   - Messen der Temperatur T1 des in der Messanzeige (1) enthaltenen Kraftstoffs (11) nach dem Füllvorgang der Messanzeige (1) mittels eines Temperatursensors, und
   - Berechnen, ausgehend von den gemessenen Temperaturen T1 und T2, eines Korrekturwerts Ec, der auf das auf der Stricheinteilung (4) der Messanzeige gelesene Volumen anzuwenden ist, wobei der Temperaturunterschied zwischen der Temperatur des Kraftstoffs, der durch das Messgerät der Zapfsäule durchläuft, und der Temperatur des in der Messanzeige enthaltenen Kraftstoffs (11) berücksichtigt wird.

6. Messverfahren gemäß Anspruch 5,
   **dadurch gekennzeichnet, dass**
   die Temperaturen T1 und T2 des Kraftstoffs mittels eines einzigen Temperatursensors gemessen werden und, wenn die Erfassung der Temperatur T2 nach dem Befüllen der Messanzeige (1) abgeschlossen ist, der Temperatursensor aus der zweiten Aufnahme (8), die an dem Messanzeigehals (3) angeordnet ist, entfernt wird, um in die erste Aufnahme (22), die an dem Messanzeigekörper (2) angeordnet ist, angeordnet zu werden, und die Erfassung der Temperatur T1 dann mit diesem Sensor durchgeführt wird.

7. Messverfahren gemäß Anspruch 5,
   **dadurch gekennzeichnet, dass**
   die Temperatur T2 des Kraftstoffs beim Einleiten in die Messanzeige (1) während des Füllvorgangs der Messanzeige (1) mittels eines Temperatursensors (10) gemessen wird, und die Temperatur T1 des in der Messanzeige (1) enthaltenen Kraftstoffs nach dem Füllvorgang der Messanzeige (1) mittels eines weiteren Temperatursensors (9) gemessen wird.

8. Messverfahren gemäß einem der Ansprüche 5 bis 7,
   **dadurch gekennzeichnet, dass**

   - eine Vielzahl Temperaturwerte T2n während einer Zeit t während des Füllvorgangs der Messanzeige gemessen wird, und
   - eine Durchschnittstemperatur T2moy ausgehend von den gemessenen Temperaturwerten T2n gemessen wird, wobei T2moy für die Berechnung des Korrekturwerts Ec verwendet wird.

**9.** Messverfahren gemäß Anspruch 8,
**dadurch gekennzeichnet, dass**
die x ersten und die x letzten Temperaturwerte T2n entfernt werden, um T2moy zu berechnen.

**Claims**

**1.** Gauging device for a fuel distributor comprising a gauge (1), comprising:

- a gauge member (2) having a predefined volume,
- a gauge neck (3) provided with a graduation (4),
- a first housing (22) located on the gauge member (2),

which device is **characterised by**:

- a second housing (8) located on the gauge neck (3), at least one temperature sensor (9, 10) which can be positioned in the first housing (22) in order to measure the temperature T1 of the fuel (11) in the gauge (1) after this gauge has been filled or which can be positioned in the second housing (8) in order to measure the temperature T2 of the fuel (11) when it is introduced into the gauge (1) during a gauging operation, and

an electronic device (18) which is connected to the temperature sensor(s) (9, 10) in order to acquire temperatures T1 and T2 and to calculate, based on the temperatures T1 and T2 measured, a correction value $E_c$ to be applied to the volume read on the graduation (4) of the gauge, taking into account the temperature deviation between the temperature of the fuel passing through the measurer of the distributor and the temperature of the fuel (11) contained in the gauge.

**2.** Gauging device according to claim 1,
**characterised in that** it comprises
a first temperature sensor (9) which is positioned in the first housing (22) in order to measure the temperature T1 of the fuel (11) in the gauge (1) after the filling operation and a second temperature sensor (10) which is positioned in the second housing (8) in order to measure the temperature T2 of the fuel (11) when it is introduced into the gauge (1).

**3.** Gauging device according to either claim 1 or claim 2,
**characterised in that**
the second housing (8) of the gauge (1) is located above the graduation (4) of the gauge neck and close to the inlet of the gauge (1).

**4.** Gauging device according to any one of claims 1 to 3,
**characterised in that**
the temperature sensor(s) (9, 10) comprise(s) a thermal insulation means which is arranged between this/these sensor(s) and the wall of the gauge.

**5.** Gauging method using the gauging device according to any one of claims 1 to 4, **characterised in that** it comprises the following successive steps:

- measuring the temperature T2 of the fuel when it is introduced into the gauge (1) during the filling operation of this gauge (1) using a temperature sensor,
- measuring the temperature T1 of the fuel (11) contained in the gauge (1) after the operation for filling this gauge (1) using a temperature sensor, and
- calculating from the temperatures T1 and T2 measured a correction value $E_c$ to be applied to the volume read on the graduation (4) of the gauge, taking into account the temperature deviation between the temperature of the fuel passing through the measurer of the fuel distributor and the temperature of the fuel (11) contained in the gauge.

**6.** Gauging method according to claim 5,
**characterised in that**
the temperatures T2 and T1 of the fuel are measured using a single temperature sensor and, when the acquisition of the temperature T2 is complete after the gauge (1) has been filled, the temperature sensor is withdrawn from the second housing (8) located on the gauge neck (3) in order to be placed in the first housing (22) located on the gauge body (2), and the acquisition of the temperature T1 is then carried out with this sensor.

7. Gauging method according to claim 5,
   **characterised in that**
   the temperature T2 of the fuel is measured when it is introduced into the gauge (1) during the operation for filling the gauge (1) using a temperature sensor (10), and the temperature T1 of the fuel (11) contained in the gauge (1) is measured after the operation for filling this gauge (1) using another temperature sensor (9).

8. Gauging method according to any one of claims 5 to 7,
   **characterised in that**

   - a plurality of values of temperatures T2n is measured during a time t during the operation for filling the gauge, and
   - a mean temperature T2moy is calculated based on these measured temperature values T2n, T2moy being used in order to calculate the correction value $E_c$.

9. Gauging method according to claim 8,
   **characterised in that**
   the x first and the x last temperature values $T2_n$ are eliminated in order to calculate $T2_{moy}$.

FIGURE 1

Art antérieur

FIGURE 2

FIGURE 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2955658

- FR 2971499

**Littérature non-brevet citée dans la description**

- Spécifications and Tolerances for Reference Standards and Field Standards Weights and Measures Spécifications and Tolerances for Graduated Neck Type Volumetric Field Standards. NIST Handbook 105-3. Février 2010